# EUROPEAN PATENT APPLICATION

(11) **EP 0 791 994 A1**
(43) Date of publication of application: **27.08.1997**
(21) Application number: 97300896.4
(22) Date of filing: 12.02.1997
(51) Int. Cl.: H02G 3/04, H02G 3/06

(54) **Riveted structural channel assembly and method for making same**

(30) Priority: 23.02.1996 US 606386
(71) Applicant: THOMAS & BETTS CORPORATION, Memphis, Tennessee 38119 (US)
(72) Inventor: Sparks, Allen S., De Soto, Mississippi (US); Warren, James K., Shelby, Tennessee (US); Bartholomew, Paul J., Shelby, Tennessee (US)
(74) Representative: Howick, Nicholas Keith

(57) **Abstract**

A structural channel assembly (10) comprised of at least two elongated channel members (18,20,21), each channel member having a back wall (22) and a pair of spaced sidewalls (24,25) extending substantially parallel therefrom to define an interior channel (32) having a substantially U-shaped cross-section. Each of the channel members includes a corrosion resistant coating over the entire surface of said channel member. The assembly further includes a plurality of corrosion resistant coated rivets (40), each of the coated rivets fixably securing the channel members to each other.

## Description

### FIELD OF INVENTION:

The present invention relates generally to structural framing members. More particularly, the present invention relates to a structural channel assembly comprising a plurality of channel members having a substantially U-shaped cross-section which are secured to each other by rivets.

### BACKGROUND OF THE INVENTION:

Structural channel is used throughout commercial buildings in order to provide a means for supporting electrical and mechanical systems such as pipes, ducts, conduits, busways, lighting fixtures, racks and air conditioning units. Typically such support is provided by securing the channel to a wall or ceiling and then mounting the system to be supported to the channel. The channel is typically provided with a slot in which various types of brackets, pipe straps and fittings are inserted. These brackets and fittings are then secured to the system which is to be supported. In order to accommodate various support applications, structural channel members may be joined to each other in either back to back, side to side or back to side configurations forming channel assemblies. The joining of the channel members, however, creates various problems including the proper application of a corrosion resistant finish and verification that the connection between members is sound.

Structural channel is normally made of steel due to the material's relatively low cost and high strength as well as other favorable mechanical qualities. The use of steel, however, presents problems of corrosion which can lead to a weakening of the channel. Corrosive agents are ever present in the industrial environment in which these channel assemblies are typically used. Certain chemicals present in the air in various industrial environments can aggressively corrode steel channel members. Even ambient water vapor can lead to corrosion, and such corrosion is exasperated in areas having high humidity or if the channels are used in outdoor environments. Furthermore, such supports may become contaminated by fluids flowing through the supported leaking pipes. These fluids, may be particularly corrosive and further advance the deterioration of the steel structural channel supports.

Corroded channel must be replaced since the deteriorated channel may structurally fail. Such failure could result in damage to the mechanical or electrical systems which are no longer adequately supported. In addition, failure of an overhead support channel presents a potential hazard to individuals working below the failed support.

In order to inhibit corrosion, various coatings can be applied to the steel. Coatings such as zinc, cadmium or chromium may be bonded to the steel in order to increase the steel's resistance to corrosives. These coatings are typically applied by placing the steel in a solution containing the coating material and through an electrolytic process the finish is bonded to the steel. In order to achieve a proper finish, however, it is important that the entire surface area of the channel member become enveloped by the solution. This presents a problem for channel members which are mounted together at their flat surfaces since the solution tends not to adequately cover the mated surfaces. Therefore, it is typical that the individual channel members are first coated then secured to each other.

Prior art channel members which are mounted together are typically spot resistance welded. If properly done, spot welding provides adequate mechanical strength, yet welding presents various problems. Firstly, the temperatures reached during the welding process tends to burn away the corrosion resistant coating in an area around the weld. This creates an exposed area which is especially vulnerable to corrosion and provides an area upon which corrosion can begin and then start to spread outwards onto the rest of the channel.

Secondly, the use of welding as a means for securing the channel members to each other requires a secondary physical test in order to verify the weld's soundness. Due to the nature of this attachment means, visual inspection of the weld is inadequate to determine if the weld is proper. Secondary physical testing increases the production time and the costs of manufacturing a structural channel assembly. In addition, such testing introduces an additional point in the production process where errors could be introduced. Such errors could result in the failure of a defective channel assembly leading to potentially hazardous results.

Accordingly, it is desirable to provide a structural channel assembly having the individual channel members joined together such that the corrosive finish is not compromised and which can also provide for instant visual verification that a sound connection has been achieved.

### SUMMARY OF THE INVENTION:

It is an object of the present invention to provide a riveted structural channel assembly.

It is a further object of the present invention to provide a structural channel assembly having at least two elongated channel members, with each member having a back wall, and a pair of spaced sidewalls extending substantially parallel therefrom to define an interior channel having a substantially U-shaped cross-section. Each of the channel members includes a corrosion resistant coating over the entire surface of the channel member. The channel members are, fixably secured by a plurality of rivets.

It is still a further object of the present invention to provide a structural channel assembly, wherein the assembly includes a pair of channel members, and the back wall of one member is rivetably secured to the back wall of the other member such that the slots face in opposing directions.

It is yet a further object of the invention to provide a method for assembling structural channel including the steps of:
providing two elongated steel channel members, each member having a plurality of elongated joined walls which define a interior channel having a substantially U-shaped cross-section each of the channel members including a corrosion resistant coating;
forming a plurality of apertures through at least one of the walls of each of the channel members;
providing a plurality of rivets, the rivets having a corrosion resistant coating; aligning the walls of one channel member with the other channel member such that the apertures align; and
applying the rivets to the channel members through the apertures to fixably secure the channel members to each other forming an assembly.

In the efficient attainment of these and other objects, the present invention provides a structural channel assembly having at least two corrosion resistant coated elongated channel members, with each member having a back wall and a pair of spaced sidewalls extending substantially parallel therefrom to define an interior channel having a substantially U-shaped cross-section. The sidewalls each having end portions depending therefrom and inwardly turned into the interior channel forming a slot extending the length of the channel member. The channel members are fixably secured by a plurality of corrosion resistant coated rivets.

As more specifically described by way of the preferred embodiment herein, the assembly includes a pair of galvanized steel channel members. The back wall of one channel member is rivetably secured to the back wall of the other member such that the slots face in opposing directions. Each of the lips of the channel members is bent inwardly toward the back wall of the channel member and is substantially parallel to their corresponding sidewall.

### BRIEF DESCRIPTION OF THE DRAWINGS:

Figure 1 is a perspective view of a structural channel assembly of the present invention.

Figure 2 is a top plan view of the structural channel assembly of Figure 1.

Figure 3 is a vertical cross-section of the structural channel assembly of Figure 2 taken through the lines III-III.

Figure 3A shows, an exploded vertical section, one structural channel member and one rivet which are coated in accord with the present invention.

Figure 4 is an elevational view of an alternative embodiment of the present invention showing the sidewall of a structural channel member riveted to the back wall of another channel member.

Figure 5 is an elevational view of an alternative embodiment of the present invention showing the structural channel members joined at their sidewalls.

Figure 6 is an elevational view of an alternative embodiment of the present invention showing more than two channel members joined by rivets.

### DETAILED DESCRIPTION OF THE PREFERRED EMBODIMENT:

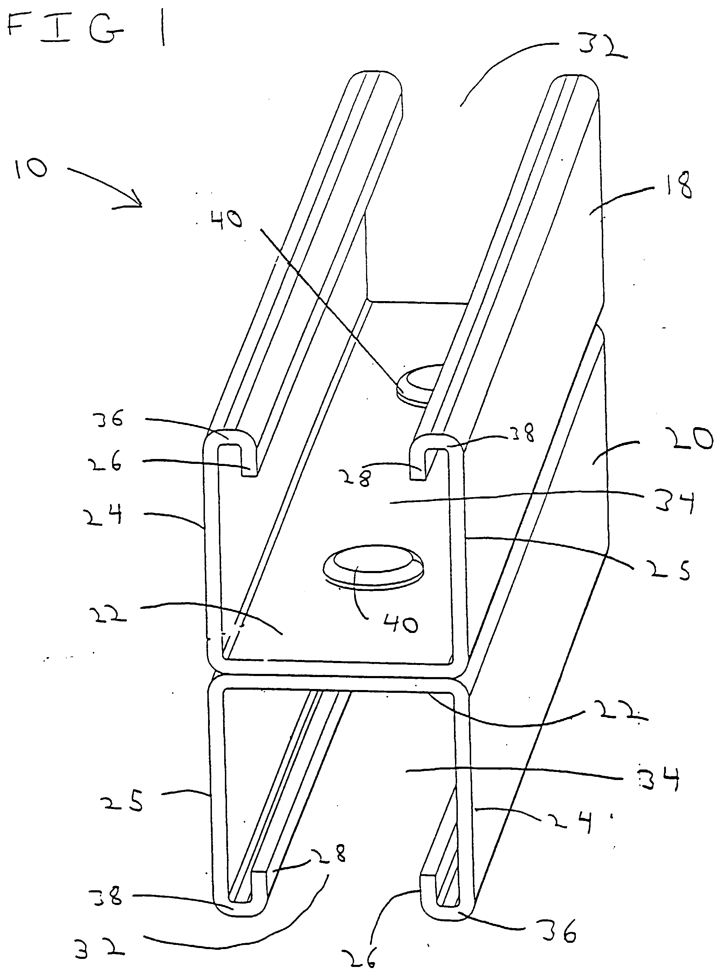

With reference to Figure 1, a riveted structural channel assembly 10 is shown. The assembly includes a pair of elongated structural channel members 18,20. These channels are preferably made of roll-formed 12 or 14 gage steel and can be cut to length to suit a particular application. Each channel member 18,20 has a back wall 22 and a pair of spaced sidewalls 24, 25 extending substantially parallel therefrom. Sidewalls 24,25 define an interior channel 34 which has a substantially U-shaped cross-section.

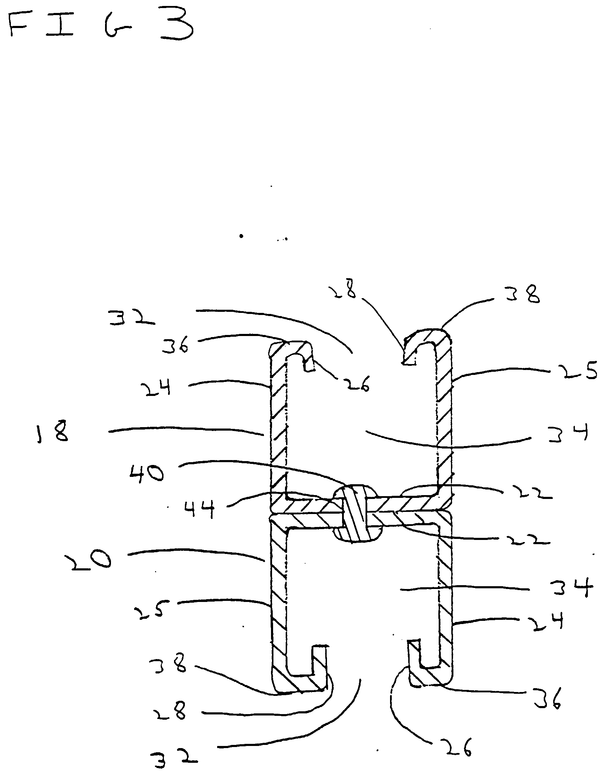

Each sidewall 24,25 terminates in an end portion 36,38 each of which is reversely bent into interior channel 34. End portions 36,38 extend back toward channel back wall 22. As shown in Figures 1 and 3, each reversely bent end portion 36,38 terminates in a lip 26, 28 that extends toward back wall 22. Each lip 26,28 is substantially parallel to its corresponding sidewall 24,25. A slot 32 is formed between the opposed inner surfaces of lips 26,28. Lips 26,28 serve as retaining points for nuts, bolts and other various fittings such as brackets and pipe straps (not shown) which, when inserted into the channel, extend outwardly from slot 32. Various mechanical and electrical systems such as pipes, ducts, conduit and the like (not shown) are supported and secured to the channel assembly via these fittings and brackets. The particular configuration and shape of the channels are shown herein as a preferred construction. Other shapes and configurations are within the contemplation of the present invention.

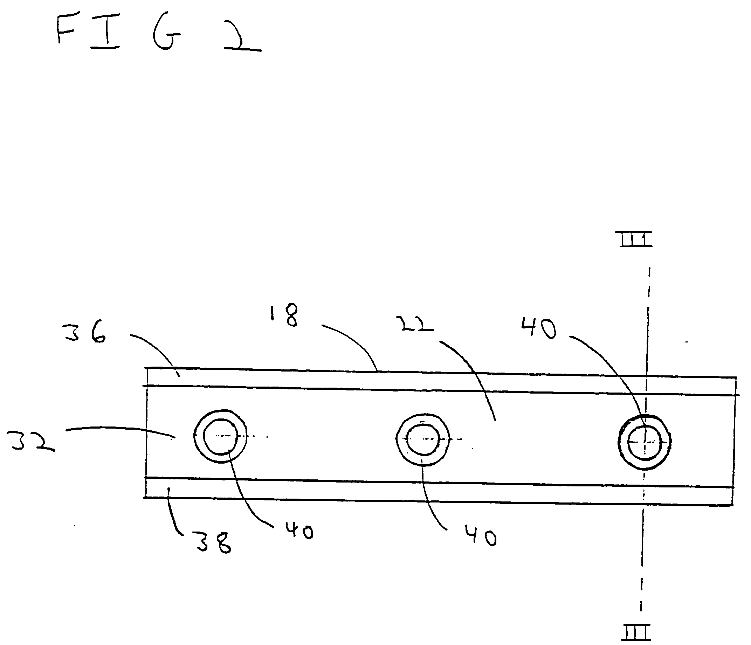

In the preferred embodiment shown in Figures 1-3, channel members 18,20 are aligned back wall to back wall along their longitudinal axes. Therefore, slots 32 of each of channel members 18,20 faces in opposite directions. Channel members 18,20 are fixably secured to each other by a plurality of rivets 40 preferably made of steel. Rivets 40 extend through apertures 44 which are formed in the back walls 22 of channel members 18,20 as shown in Figure 3. Rivets 40 are applied in conventional fashion employing connection tools. The riveted structural channel assembly provides a benefit over the prior art assemblies such as spot welding, in that no secondary physical material test is necessary in order to verify a sound connection between channels. A sound rivet connection is easily visually verifiable thereby reducing production costs and increasing quality since the possibility of secondary mechanical testing error is eliminated.

In order to assure complete corrosion resistant coverage of channel assembly 10, the individual channel members 18,20 as well as rivets 40 are coated or plated with a finish 45 which protects the steel from corrosive elements as shown in Figure 3A. As used herein throughout the terms "plated" or "coated" are used interchangeably to connote the technique of covering the components with the corrosion resistant finish. Finish 45, which preferably includes zinc, may be applied through a temperature-controlled electrolytic process in order to assure a proper bond with the steel. However, any conventional coating process is also within the contemplation of the present invention. The corrosion resistant finish 45 is important since a steel channel assembly which is deteriorated due to corrosion may structurally fail. Such failure could result in damage to the mechanical or electrical systems which are no longer adequately supported. In addition, failure of an overhead support channel presents a potential hazard to individuals working below the failed support.

The use of coated rivets 40 to secure channel members 18,20 also improves the corrosion resistance of the assembly 10 over the prior art welded structural assemblies. Coating the channel members prior to assembly assures that all surfaces of the channel members are properly coated since the coating may completely surround the entire channel member. Joining the plated channel members by spot welding, as is common in prior art practice, will result in the burning away of the corrosion resistant finish, and therefore, results in areas of unprotected steel which allows corrosion to start. The assembly of channel members with pre-coated rivets 40 eliminates the "burning away" effect of the prior art, thereby eliminating areas of unprotected steel upon which corrosion can begin. Also, the connection of two pre-coated channel members by pre-coated rivets 40 provides a fully coated connection.

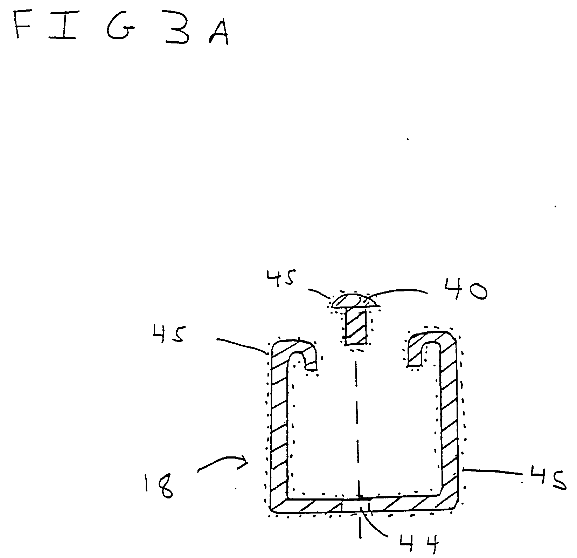

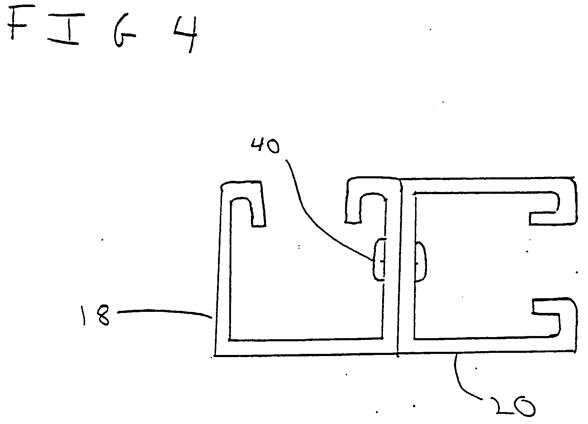

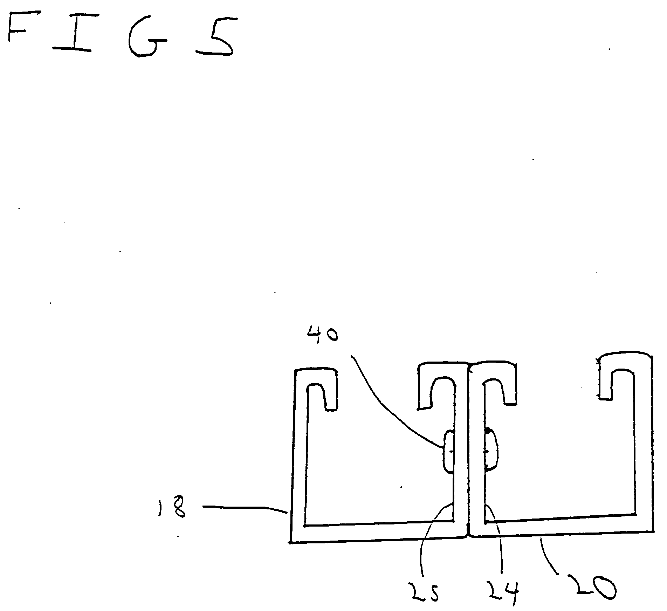

The present invention also contemplates various configurations of channel members in order to accommodate assorted support applications. The channel members can be joined so that the back wall of one channel member is joined to a sidewall of another channel member. As shown in Figure 4, back wall 22 of channel member 20 is secured with rivets 40 to one of the sidewalls 24 of channel member 18. Referring to Figure 5, channel members can also be assembled such that a sidewall can be joined to a sidewall. In Figure 5, sidewall 25 of channel member 18 is joined by rivets 40 to sidewall 24 of channel member 20 such that slots 32 face in substantially the same direction. In addition, one channel member could be inverted with respect to the other channel member and joined at their sidewalls such that slots 32 face in different directions.

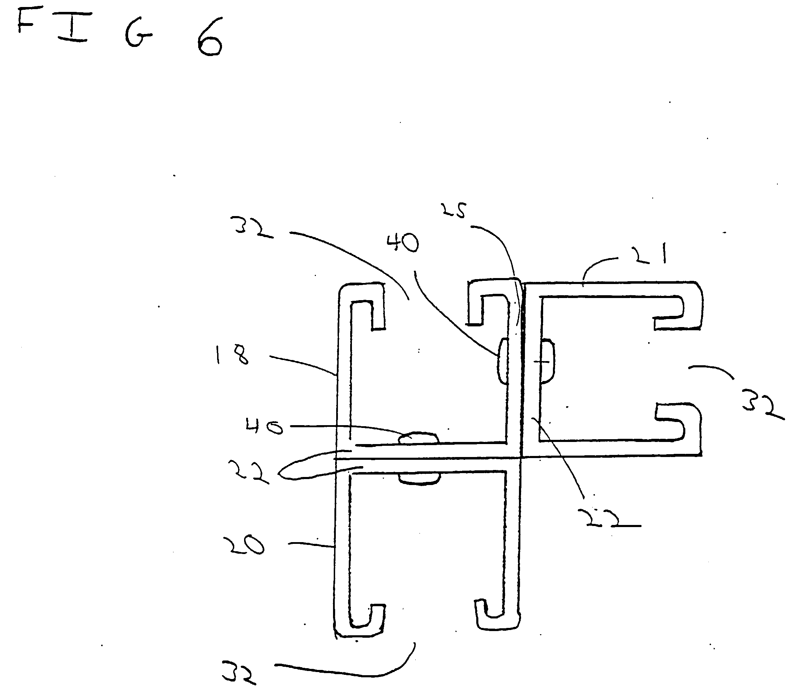

Another contemplated configuration involves the combination of more than two channel members. As shown in Figure 6, three channel members 18,20 and 21 having similar cross-sections are joined by rivets 40. Back wall 22 of channel member 18 is riveted to back wall 22 of channel member 20 and the back wall 22 of channel member 21 is riveted to side wall 25 of channel member 18. Such a configuration results in slots 32 facing in different directions. Additionally, apertures 44 are formed on the wall sections through which the rivets extend.

The present invention is also directed to a method for assembling riveted structural channel members. The method includes the steps of forming two elongated steel channel members 18,20, each channel member having a back wall 22 and a spaced pair of sidewalls 24,25 extending substantially parallel therefrom to define an interior channel 34 having a substantially U-shaped cross-section. Sidewalls 24,25 of each channel member each have a lip 26,28 depending therefrom that extends over interior channel 34 forming a slot 32. Slot 32 extends the length of the respective channel member. A corrosion resistant coating such as zinc is then applied to each of the channel members 18,20 and to the plurality of rivets 40. The coating can be applied to the rivets at any stage of the process, however, preferably prior to their attachment to the channel members. Next a plurality of apertures 44 are formed through back wall 22 of each of the channel members 18,20. The channel members are then aligned back wall to back wall such that apertures 44 align. The last step includes riveting channel members 18,20 through apertures 44 thereby fixably securing the channel members to each other forming channel assembly 10.

Various changes to the foregoing described and shown structures and method would now be evident to those skilled in the art. Accordingly, the particularly disclosed scope of the invention is set forth in the following claims.

## Claims

1. A structural channel assembly comprising:
at least two elongated channel members, each member having a back wall and a pair of spaced sidewalls extending substantially parallel therefrom to define an interior channel having a substantially U-shaped cross-section, each of said channel members including a corrosion resistant coating over the entire surface of said channel member;
at least one rivet, each of said rivets fixably securing said channel members to each other.

2. A structural channel assembly of claim 1, wherein
said channel members are longitudinally aligned and are substantially parallel to each other.

3. A structural channel assembly of claim 1 or claim 2, wherein said sidewalls each have end portions depending therefrom and are inwardly turned into said interior channel forming a slot extending the length of said channel member.

4. A structural channel assembly of any one of claims 1 to 13, wherein said rivets have a corrosion resistant coating.

5. A structural channel assembly of claim 3, wherein
each of said end portions terminates in a lip that extends back toward said back wall and is substantially parallel to a corresponding sidewall.

6. A structural channel assembly of claim 3, wherein
each of said slots faces a different direction.

7. A structural channel assembly of claim 6, wherein
said assembly includes a pair of channel members, said back wall of one member being rivetably secured to said back wall of the other member such that said slots face in opposing directions.

8. A structural channel assembly of claim 3, wherein
each of said slots faces in substantially the same direction.

9. A structural channel assembly of claim 8, wherein
said assembly includes a pair of channel members, said sidewall of one member being rivetably secured to said sidewall of the other member.

10. A structural channel assembly of claim 6, wherein
said slots face opposing directions.

11. A structural channel assembly of claim 6, wherein
said assembly includes three channel members.

12. A structural channel assembly of any one of claims 1 to 11, wherein
each of said channels is roll-formed steel.

13. A structural channel assembly of any one of claims 1 to 12, wherein said coating includes a galvanized finish.

14. A structural channel assembly comprising:
two elongated individually galvanized steel channel members each member having a back wall and a spaced pair of sidewalls extending substantially parallel therefrom to define a interior channel having a substantially U-shaped cross-section;
a plurality of individually galvanized rivets, said rivets securing said back wall of one member to said back wall of the other member.

15. A structural channel assembly of claim 14, wherein said sidewalls of each of said channel members each has inwardly turned end portions depending therefrom, each of said inwardly turned end portions is reversely bent into said channel interior and terminates in a lip which extends back toward said back wall being substantially parallel to a sidewall corresponding to said lip thereby forming a slot extending the length of said channel member.

16. A method for assembling channel members comprising the steps of;
providing two elongated steel channel members, each member having a plurality of elongated joined walls which define a interior channel having a substantially U-shaped cross-section, each of said channel members including a corrosion resistant coating;
forming a plurality of apertures through at least one of said walls of each of said channel members;
providing a plurality of rivets, said rivets having a corrosion resistant coating;
aligning said walls of one said channel member with the other said channel member such that said apertures align; and
applying said rivets to said channel members through said apertures to fixably secure said channel members to each other forming an assembly.
